# EUROPEAN PATENT APPLICATION

(11) **EP 1 341 136 A2**
(43) Date of publication of application: **03.09.2003**
(21) Application number: 02015210.4
(22) Date of filing: 08.07.2002
(51) Int. Cl.: G07F 19/00, H04M 17/00, G07F 7/10

(54) **A method for processing transactions by means of wireless devices**

(30) Priority: 28.02.2002 DE 10208637
(71) Applicant: Al-Khaja, Ali Hassan, Tubli 711 (BH)
(72) Inventor: Al-Khaja, Ali Hassan, Tubli 711 (BH)
(74) Representative: Berngruber, Otto, Dr. Dipl.-Chem.

(57) **Abstract**

Within the scope of the method for processing transactions by means of wireless devices, especially by means of devices for mobile communication, at least one device for mobile communication is used which comprises a card, with a connection being established by at least one transaction partner to a service provider, by means of which data relevant for the transaction and a credit card number or an account number of a first transaction partner as well as the transaction amount are transmitted, with said information being confirmed by means of a digital signature and/or a PIN and with thereafter an account number or credit card number being entered by a second transaction partner from which the amount to be paid into the stated account of the first transaction partner is to be debited or into which the amount to be paid by the first transaction partner is to be paid, with said entries being confirmed by means of a digital signature and/or a PIN of the second transaction partner and with thereafter the transaction being performed.

## Description

The present invention relates to a method for the secure processing of transactions by means of wireless devices according to the preamble of claim 1.

Currently, there are several methods for electronic or wireless processing of business or transactions, e.g. the Internet is increasingly gaining in importance. Moreover, methods are known which allow financial transactions by means of a mobile phone.

Credit cards are used with increasing frequency because they represent a very convenient method for processing business transactions, both for the purchaser as well as for the seller.

Direct debit processes from a desired account are also possible.

The present invention is based on the object of simplifying wireless financial transactions, especially by means of credit card.

It is a further object of the present invention to provide a method which allows obtaining the confirmations from two or more persons for certain types of financial transactions.

This object is achieved by the features of the claim 1. Further embodiments, variants and advantages are disclosed in the alternative independent claims and the subclaims.

It is therefore proposed for processing financial transactions to use a device for mobile communication in combination with a card disposed in the device for mobile communication.

According to a first variant of the present invention it is possible by means of a device for mobile communication such as a mobile phone for example to perform a credit card transaction or a direct debit or payment by means of an account.

To this end, a connection is established by means of the device for mobile communication by a first transaction partner to a service provider such as a bank for example.

After the establishment of the connection, relevant data of the first transaction partner, preferably in encrypted form, are transmitted to the service provider. Such data are for example name, credit card number, further credit card data, or also the data of the bank account of the first transaction partner. The transmission of such data can be provided with a time signal, so that on exceeding a predetermined interval, the transaction is terminated. It is optionally possible that the first transaction partner authenticates itself to the service provider by means of a digital signature. Moreover, the entry of such data can be completed by means of an optional entry of a PIN.

Preferably, the data to be transmitted are stored on the card disposed in the device, e.g. on the SIM card.

Finally, it is possible, depending on the desired type of transaction, to enter an amount of money which is to be paid into the account or is to be debited from the account or credit card. This entry can also be confirmed, e.g. by means of a digital signature and/or a pin.

In a further step, an account number or a credit card number is preferably entered by the second transaction partner from which the amount of money to be paid into the stated account of the first transaction partner is to be debited or into which the amount of money to be paid by the first transaction partner is to be paid.

Hereby, the second transaction partner can confirm this entry in accordance with the invention by means of his digital signature and/or a PIN. It is also possible to confirm the amount of the money. Finally, the transaction is performed. It is also provided that the display of the device for mobile communication shows a transaction confirmation with all or a part of the transaction data. This transaction confirmation can also be printed out by means of a connectable printer device. It is also possible to send said confirmation to a further device for mobile communication of the first or second transaction partner.

In order to avoid the entry of account or credit card data, it may be provided that the device for mobile communication is equipped with an internal or external credit card reader.

For certain types of transactions it may be appropriate or necessary to obtain a confirmation in the form of a permission or authorization of a further transaction partner who is not present. This may be the case for example when a child or family member wishes to debit or transfer an amount of money from a joint account or a joint credit card. It may be appropriate for youths in particular to obtain the parent's permission for such a business transaction, e.g. for transactions which exceed a certain predetermined amount of money. Moreover, such a procedure may be required for shareholders, authorized signatories or other employees of a company.

For this reason it is provided for within the scope of the method in accordance with the invention, namely in the case of a debit from a certain account which may also be a credit card account, to obtain the permission in an electronic way from a business partner or a family member. For this purpose the step is provided that after the establishment of the connection to the service provider and the entry of the account or credit card from which a certain sum is to be debited, e.g. within the scope of a transaction as explained above, the service provided on its part establishes a connection with a device for mobile communication of a further transaction partner whose confirmation is required in order to obtain this person's approval in form of a digital signature and/or a PIN for the desired transaction business. For this purpose relevant data of the impending business transaction are sent to the further transaction partner. In accordance with the invention, the further transaction partner can then use his device for mobile communication to send his confirmation by means of a digital signature and/or a PIN for example. It is also possible to send a refusal in a similar way. Should it not be possible to notify the further transaction partner directly, the request for confirmation can be stored on his device for mobile communication or in the network like a conventional SMS message which will reach the same once he is reachable again.

It may also be provided in accordance with the invention to obtain the confirmation prior to the actual time of transaction. In this process, a parent for example may confirm in advance via an already established connection to a service provider that the child may dispose of a certain sum from a certain account. Alternatively, a transaction partner may ask for the confirmation of a further transaction partner via the above-mentioned connection to the service provider. This can be displayed to the same by means of the display on his device for mobile communication for example.

It is also provided for optionally in order to increase security that the transmission of the transaction data occurs in an encrypted manner either entirely or partly.

Within the scope of a further advantageous variant of the invention it is provided that for processing a transaction, two devices for mobile communication are required which are connected sequentially or simultaneously with a service provider. This can concern same service provider or two different services providers which preferably should be able to communicate with each other.

In this case a connection is established to the service provider by a first transaction partner as explained above, with the relevant data such as an account number or a credit card number being stated. As already mentioned, these entries can be confirmed by means of a digital signature and/or a PIN and be provided with a time signal. Thereafter one can state an amount of money which is either to be debited or paid. Then a unique transaction number can be assigned. In order to obtain the approval of the second transaction partner it is provided for within the scope of this variant of the invention that the second transaction partner establishes a connection to a service provider via his or a further device for mobile communication, which service provider can also be the same service provider of the first transaction partner. Then the same is required to enter his relevant data such as account number or credit card number for payment or debit, accompanied by a confirmation in form of a digital signature or a PIN for example. By entering the unique transaction number as provided to the same by the first transaction partner, details of the transaction and an inquiry for a confirmation appear on the display. Following an optional correction of the amount of money or further data, the confirmation of the transaction can be performed in form of a digital signature and/or a PIN.

In this case too, a confirmation of the transaction can appear on the display of at least one of the two transaction partners. Manipulations are excluded by assigning the unique transaction number.

The authorization of a further transaction partner can also be obtained for this form of transaction, as already described above.

It may also be provided that the authorizations of several transaction partners are obtained.

Alternatively it is possible that one obtains a unique subscriber number following a one-off registration with a service provider or a service provider network. In this way a first transaction partner can enter the subscriber number of the second transaction partner for example after the entry of the transaction data. Finally, a connection is established to said second transaction partner by the service provider on the basis of the subscriber number, e.g. by means of a phone call or a connection to the device for mobile communication. From this point the second transaction partner can confirm or reject the transaction which is displayed to the same. In this process he can enter, as already explained, his relevant data (account number, etc.) which can also be stored in the device or on the card in the device. A confirmation is made by means of entering a digital signature and/or a PIN. A confirmation of a further transaction partner may also be required in accordance with the invention for this kind of transaction processing in the way as explained above.

In order to simplify transaction processing, relevant data of the user can be stored by the service provider. They are made available or used after the performed establishment of a connection and authentication by means of PIN and/or a digital signature.

The connections to the service provider can be wireless connections of any kind, e.g. it is possible to establish an Internet connection.

## Claims

1. A method for processing transactions by means of wireless devices, especially devices for mobile communication, **characterized in that** at least one device for mobile communication is used which comprises a card, with a connection being established by at least one transaction partner to a service provider, by means of which data relevant for the transaction and a credit card number or an account number of a first transaction partner as well as the transaction amount are transmitted, with said information being confirmed by means of a digital signature and/or a PIN and with thereafter an account number or credit card number being entered by a second transaction partner from which the amount to be paid into the stated account of the first transaction partner is to be debited or into which the amount to be paid by the first transaction partner is to be paid, with said entries being confirmed by means of a digital signature and/or a PIN of the second transaction partner and with thereafter the transaction being performed.

2. method for processing transactions by means of wireless, especially devices for mobile communication, **characterized in that** a connection is established to a service provider by a first transaction partner by means of a first device for mobile communication, by means of which data relevant for the transaction and a credit card number or an account number of a first transaction partner as well as the transaction amount are transmitted, with said information being confirmed by means of a digital signature and/or a PIN and with thereafter a unique transaction number being assigned by the service provider and that then a second transaction partner establishes a connection to a service provider by means of a further device for mobile communication, by means of which his relevant data, the unique transaction number as well as an account number or credit card number are transmitted from which the amount to be paid into the stated account of the first transaction partner is to be debited or into which the amount to be paid by the first transaction partner is to be paid, with said entries being confirmed by means of a digital signature and/or a PIN of the second transaction partner and with thereafter the transaction being performed.

3. A method as claimed in claim 2, **characterized in that** after the entry of the transaction number the display of the second transaction partner shows details of the transaction and a query for confirmation appears, with thereafter the confirmation of the transaction being made in the form of a digital signature and/or a PIN.

4. A method for processing transactions by means of wireless devices, especially by means of devices for mobile communication, **characterized in that** a connection is established to a service provider by a first transaction partner by means of a first device for mobile communication, by means of which data relevant for the transaction and a credit card number or an account number of a first transaction partner as well as the transaction amount are transmitted, with said information being confirmed by means of a digital signature and/or a PIN and with thereafter a unique subscriber number of a second transaction partner being entered and that thereafter a connection is established to a device for mobile communication of the second transaction partner by a service provider on the basis of the subscriber number, by means of which the second transaction partner is informed about the relevant data of the transaction and can confirm the transaction after entering an account or credit card number and authentication by means of a digital signature and/or a PIN.

5. A method as claimed in one of the preceding claims, **characterized in that** in the case of a debit from a certain account the confirmation of this transaction is demanded by a further transaction partner.

6. A method as claimed in claim 5, **characterized in that** after the establishment of a connection to the service provider and the entry of the account or credit card number from which a certain amount is to be debited, the service provider establishes a connection to a further device for mobile communication of a further transaction partner whose confirmation is required, with the same being shown relevant data of the impending transaction and whose confirmation is demanded in the form of a digital signature and/or a PIN for the desired transaction business and that the transaction is performed after the confirmation.

7. A method as claimed in claim 5 or 6, **characterized in that** the confirmation is obtained prior to the actual transaction time, with one transaction partner entering in advance the confirmation for approving the debit of a certain sum by means of a connection to a service provider by entering a digital signature and/or a PIN for the account or credit card number from which a certain amount is to be debited.

8. A method as claimed in one of the preceding claims, **characterized in that** the transmission of the data occurs partly or fully encrypted.

9. A method as claimed in one of the preceding claims, **characterized in that** the data are stored partly or fully in the device for mobile communication or on a card disposed in the device.

10. A method as claimed in claim 9, **characterized in that** the card is a SIM card.

11. A method as claimed in one of the preceding claims, **characterized in that** the device for mobile communication is a mobile phone.

12. A method as claimed in one of the preceding claims, **characterized in that** relevant data of the users are stored by the service provider, which data are made available or used after the completed establishment of a connection and authentication by means of a PIN and/or a digital signature.

13. A method as claimed in one of the preceding claims, **characterized in that** a transaction confirmation with all or a part of the transaction data is displayed on the display of the involved devices for mobile communication.

14. A method as claimed in claim 13, **characterized in that** the transaction confirmation is printed out by means of a connectable printer device.

15. A method as claimed in one of the preceding claims, **characterized in that** the transmission of the data is provided with a time signal, with the transaction being terminated on exceeding a predetermined time interval.
